# EUROPÄISCHE PATENTSCHRIFT

(11) **EP 1 444 025 B1**
(45) Veröffentlichungstag und Bekanntmachung des Hinweises auf die Patenterteilung: **27.12.2006**
(21) Anmeldenummer: 02783018.1
(22) Anmeldetag: 28.10.2002
(51) Int. Cl.: B01D 33/21, B01D 33/23

(54) **FILTER MIT DREHBAREN, SCHEIBENFÖRMIGEN FILTERELEMENTEN**
FILTER COMPRISING ROTATABLE, DISK-SHAPED FILTER ELEMENTS
FILTRE COMPORTANT DES ELEMENTS FILTRANTS ROTATIFS EN FORME DE DISQUE

(30) Priorität: 07.11.2001 DE 10154549
(43) Veröffentlichungstag der Anmeldung: 11.08.2004
(73) Patentinhaber: Fraunhofer-Gesellschaft zur Förderung der angewandten Forschung e.V., 80686 München (DE)
(72) Erfinder: STERNAD, Werner, 70197 Stuttgart (DE); TRÖSCH, Walter, 70329 Stuttgart (DE); SCHREINER, Lothar, 70563 Stuttgart (DE)
(86) Internationale Anmeldenummer: PCT/EP2002/012007
(87) Internationale Veröffentlichungsnummer: WO 2003/039712

(56) Entgegenhaltungen:
- EP-A- 1 149 619
- DE-B- 2 146 022
- SU-A- 1 618 433
- US-A- 4 132 649
- US-A- 4 717 485
- PATENT ABSTRACTS OF JAPAN vol. 018, no. 410 (C-1232), 2. August 1994 (1994-08-02) & JP 06 121919 A (HITACHI PLANT ENG & CONSTR CO LTD), 6. Mai 1994 (1994-05-06)

## Beschreibung

Die Erfindung betrifft eine Vorrichtung zum Trennen von Stoffen, insbesondere Feststoffen, Flüssigkeitsphasen unterschiedlicher Dichte und/oder Gasen, aus einer Flüssigkeit, durch Rotation mit mehreren Filterelementen, welche die filtrierte Flüssigkeit passieren lassen und die um eine Drehachse drehbar in einem Gehäuse aufgenommen sind, das eine Eintrittsöffnung für die Flüssigkeit, mindestens eine Austrittsöffnung für die durch Rotation der Flüssigkeitssäule getrennten nicht filtrierten Anteile des Zulauffluids und mindestens eine Austrittsöffnung für die filtrierte Flüssigkeit aufweist.

Derartige Vorrichtungen werden beispielsweise bei der Abwasserreinigung eingesetzt. Bei physikalischen Verfahren zur Abwasserreinigung werden die Abwasserinhaltsstoffe entsprechend ihren physikalischen Eigenschaften, wie Teilchengröße, Dichte und Sinkgeschwindigkeit, nach unterschiedlichen Verfahren aufkonzentriert. Hierzu zählen alle Verfahren, die als Trennmittel feste Hilfsstoffe (zum Beispiel Adsorption, Filtration, Ionenaustausch), flüssige Hilfsstoffe (Extraktion), gasförmige Hilfsstoffe (Flotation, Strippen), Wärmeenergie (Destillation, Eindampfen), Schwerkraft beziehungsweise Zentrifugalkräfte (Absetzen, Aufschwimmen) verwenden. Insbesondere finden derartige Vorrichtungen bei der Membrantrenntechnik, das heißt mit Hilfe von Membranen durchgeführte Trennprozesse, Anwendung.

Vorrichtungen der Membrantrenntechnik werden außer bei der Wasseraufbereitung in vielen anderen industriellen Anwendungsbereichen eingesetzt. Mittels Membranen mit unterschiedlichen Porengrößen sind Partikel bis zu 5 nm abtrennbar. Beim Trennvorgang werden Feststoffe zumindest direkt an der Membran auf konzentriert, während die filtrierte Flüssigkeit die Membran passiert. Die resultierende Konzentrationspolarisation führt zu einer Deckschicht -auch als Membranfouling bekannt-, deren Entstehung durch unterschiedliche Betriebsweisen beeinflusst werden kann. Klassische Betriebsweisen sind einerseits die Dead-end-(DEF) und andererseits die Cross-Flow-Filtration-Filtration(CFF). Diese unterscheiden sich im Wesentlichen dadurch, dass bei der DEF keine Anströmung der Membran erzwungen wird und deshalb die Deckschicht unkontrolliert anwachsen kann, während bei der CFF die Membran gezielt überströmt wird, wodurch die Deckschicht sich kontrolliert aufbaut und begrenzt werden kann. Dennoch tritt nach längerer Betriebszeit eine Reduzierung des Filtratstroms auf, die durch eine reversible Deckschichtbildung verursacht wird. Sowohl bei der DEF als auch bei der CFF hat sich deshalb ein periodisches Rückspülen bewährt, um konstante Filtratflüsse zu erzielen.

Der aus der Betriebsweise resultierende typische spezifische Energiebedarf für eine Cross-Flow-Ultrafiltration liegt zum Beispiel bei 3 bis 7 kWh/m³ bei Filtratflüssen von 100 bis 150 1/m²h und einem Transmembrandruck von 3 bis 5 bar. Für eine DEF ergeben sich Vergleichswerte von 0,1 bis 0,5 kWh/m³ bei Filtratflüssen von 50 bis 80 1/m²h und einem Druck von 0,5 bis 2 bar. Dies führt bei hohen Volumenströmen und geringer Wertschöpfung des Produkts, wie dies bei der kommunalen oder industriellen Abwasserreinigung oder der Trinkwassergewinnung aus Oberflächengewässern der Fall ist, zu hohen Betriebskosten, die einen breiten Einsatz zur Zeit verhindern.

In der nicht vorveröffentlichten DE 100 04 096 werden als Filterelemente in Rotation versetzbare Filterscheiben vorgeschlagen, die stapelweise angeordnet eine große wirksame Filterfläche auf kleinem Raum gewährleisten. Die Deckschichtbildung an den Filterscheiben wird ausschließlich durch die im Betrieb auf die Suspension wirkenden Zentrifugalkräfte beeinflusst und kontrolliert. Bei im Rahmen der vorliegenden Erfindung durchgeführten Versuchen hat sich herausgestellt, dass in der durch die rotierenden Filterelemente in Rotation versetzten Flüssigkeitssäule sich leichte Stoffe wie Öle, Fette und gelöste gasförmige Komponenten im Bereich der Welle zwischen den Filterelementen sammeln, wo sie Probleme verursachen (Verblockung der Filteroberfläche).

Die JP 6121919 betrifft eine Filteranordnung, bei der sich durch die Rotation (Zentrifugalkraft) eine Druckdifferenz von innen (Achse) nach außen (Mantel) einstellt, sodass eine Flüssigkeitsströmung entlang des Druckgefälles ermöglicht wird. Dies entspricht dem Prinzip der Kreiselpumpe, funktioniert aber nur mit im Wesentlichen homogenen Medien. Bei Mehrphasengemischen würde im Betrieb eine Auftrennung in die schweren und leichten Phasen auftreten. Die Ansammlung der Leichtstoffe in Achsnähe wurde schließlich den gesamten Trennapparat erfüllen, und die Pumpwirkung käme zum erliegen. Diese Vorrichtung ist daher nicht für die Trennung von Mehrphasengemischen geeignet.

Aufgabe der Erfindung ist es daher, eine Vorrichtung der eingangs geschilderten Art zu schaffen, bei der die Ansammlung von Leichtstoffen zwischen den Filterelementen im Bereich oder in der Nähe ihrer Drehachse vermieden wird. Dabei soll die erfindungsgemäße Vorrichtung einfach aufgebaut und kostengünstig herstellbar sein.

Die Aufgabe wird durch Vorrichtungen zum Trennen von Stoffen aus einem Fluid gelöst, welche die Merkmale der Patentansprüche 1, 4 oder 5 aufweisen. Durch Anlegen eines Druckgefälles wird ein Durchströmen der Filterelemente erreicht. Die Drehachse der Filterelemente ist vorzugsweise im Wesentlichen vertikal angeordnet, um den Auftrieb der Leichtstoffe entgegen der Erdschwerkraft auszunutzen. Der Durchgang gewährleistet, dass die sich im Betrieb der Vorrichtung zwischen den Filterelementen im Bereich oder in der Nähe ihrer Drehachse ansammelnden Leichtstoffe in dem Gehäuse wandern können. Bei den Stoffen mit einer geringeren Dichte als die Flüssigkeit handelt es sich um Leichtstoffe wie Gase, Öle, Fette oder Benzin, welche, abgesehen von dem filtrierbaren Anteil, nicht durch die Filterelemente hindurchgehen.

Eine erfindungsgemäße Variante ist dadurch gekennzeichnet, dass die Filterelemente im Wesentlichen scheibenförmig, insbesondere kreisringscheibenförmig, ausgebildet sind und die Innenräume der Filterelemente mit dem Innenraum einer Hohlwelle in Verbindung stehen, über welche die filtrierte Flüssigkeit abgeführt wird. Die filtrierte Flüssigkeit gelangt also durch die Filterelemente hindurch in den Innenraum der Hohlwelle. Vorzugsweise ist in jedem Filterelement mindestens eine Durchgangsöffnung für die unfiltrierte Flüssigkeit in der Nähe der Hohlwelle angeordnet. Die zusätzlichen Durchgangsöffnungen ermöglichen den Durchtritt von in der Flüssigkeit befindlichen Leichtstoffen, die sich aufgrund ihres geringen spezifischen Gewichts im Bereich der Drehachse der Filterelemente sammeln, durch das Filterelement. Da sich die Filterelemente im Betrieb um ihre Drehachse drehen, können die in dem Gehäuse aufsteigenden Leichtstoffe durch alle Filterelemente hindurch nach oben steigen, und zwar sogar dann, wenn nur eine einzige Durchgangsöffnung in jedem Filterelement vorgesehen ist.

Ein bevorzugtes Ausführungsbeispiel der Vorrichtung ist dadurch gekennzeichnet, dass die Durchgangsöffnungen in den Filterelementen im Wesentlichen im gleichen radialen Abstand zu der Hohlwelle fluchtend angeordnet sind. Dadurch wird, insbesondere bei stillstehenden oder langsam rotierenden Filterelementen ein direkter Durchgang durch mehrere Filterelemente gewährleistet, die axial voneinander beabstandet auf der Hohlwelle angeordnet sind.

Eine weitere erfindungsgemäße Variante ist dadurch gekennzeichnet, dass die Filterelemente im Wesentlichen kreisringscheibenförmig ausgebildet sind und die Innenräume der Filterelemente über mehrere in Umfangsrichtung voneinander beabstandete, hohle Speichen mit dem Innenraum einer konzentrisch zu der Drehachse der Filterelemente angeordneten Hohlwelle in Verbindung stehen, über welche die filtrierte Flüssigkeit abgeführt wird. Die hohlen Speichen haben eine Doppelfunktion. Einerseits schaffen sie eine Fluidverbindung zwischen den Filterelementen und der Hohlwelle. Andererseits ermöglichen sie den Durchtritt von Leichtstoffen in der Nähe der Hohlwelle in Richtung der Drehachse der Filterelemente.

Bevorzugte Ausführungsbeispiele sind dadurch gekennzeichnet, dass in der Oberseite des Gehäuses in der Nähe der Hohlwelle eine zusätzliche Austrittsöffnung angeordnet ist. Die zusätzliche Austrittsöffnung dient dem Austritt von Leichtstoffen, die aufgrund ihres Auftriebs durch die Durchgangsöffnungen in den Filterelementen oder zwischen den Speichen hindurch zur Oberseite des Gehäuses aufgestiegen sind. Die durch die Rotation der Flüssigkeitssäule in Richtung Gehäusewandung abgetrennten Schwerstoffe, deren Dichte größer als die Dichte des Hauptfluids ist, können durch eine Austrittsöffnung an der Gehäusewandung, nahe des Gehäusebodens, abgezogen werden.

Eine weitere erfindungsgemäße Variante ist dadurch gekennzeichnet, dass die Filterelemente im Wesentlichen kreisringscheibenförmig ausgebildet sind und mit einem Ringraum in Verbindung stehen, der konzentrisch zu der Drehachse der Filterelemente radial außerhalb der Filterelemente angeordnet ist. Der Ringraum dient zur Aufnahme der filtrierten Flüssigkeit. Die Anordnung des Aufnahmeraums für die filtrierte Flüssigkeit radial außerhalb der Filterelemente liefert den Vorteil, dass die Strömung in den Aufnahmeraum durch die im Betrieb wirkenden Zentrifugalkräfte unterstützt wird. Außerdem wird radial innerhalb der Filterelemente ein zentraler Durchgang gebildet, der einen ungehinderten Aufstieg der Leichtstoffe nach oben gewährleistet.

Diese Vorrichtung ist weiter dadurch gekennzeichnet, dass die Filterelemente mit einer Trommel drehfest verbunden sind, die in dem Gehäuse drehbar gelagert und im Bereich der Filterelemente durchlässig für die filtrierte Flüssigkeit ist. Über die Trommel können die Filterelemente zusammen in Drehung versetzt werden. Die durchlässige Ausbildung der Trommel im Bereich der Filterelemente gewährleistet, dass die filtrierte Flüssigkeit aus den Filterelementen austreten kann.

Ein weiteres bevorzugtes Ausführungsbeispiel der Vorrichtung ist dadurch gekennzeichnet, dass die Trommel im Wesentlichen kreiszylinderförmig ausgebildet ist, und dass an der unteren Stirnseite der Trommel ein Eintrittsstutzen für die Flüssigkeit und an der oberen Stirnseite der Trommel ein Austrittsstutzen für Leichtstoffe vorgesehen ist. Durch diese Anordnung ist sichergestellt, dass Leichtstoffe aufgrund ihres Auftriebs ungehindert zum Austrittsstutzen gelangen.

Ein weiteres bevorzugtes Ausführungsbeispiel der Vorrichtung ist dadurch gekennzeichnet, dass der Eintrittsstutzen und der Austrittsstutzen konzentrisch zu den Filterelementen angeordnet sind und zur Lagerung der Trommel verwendet werden. Der sich daraus ergebende einfache Aufbau führt zu geringen Herstellkosten der Vorrichtung. Zudem ist es vorteilhaft, dass die Trommel mit den Filterelementen vormontiert werden kann.

Ein weiteres bevorzugtes Ausführungsbeispiel der Vorrichtung ist dadurch gekennzeichnet, dass im unteren Bereich des Gehäuses radial außen eine Austrittsöffnung vorgesehen ist, die mit dem Inneren der Trommel in Verbindung steht. Die Austrittsöffnung dient aufgrund ihrer Anordnung radial außen dem Austritt von aus der Flüssigkeit herausgefilterten Feststoffen, die eine größere spezifische Dichte aufweisen als die Flüssigkeit.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine erste Ausführungsform der erfindungsgemäßen Vorrichtung im Längsschnitt;
- Figur 2: ein einzelnes Filterelement aus der in Figur 1 dargestellten Vorrichtung in der Draufsicht;
- Figur 3: ein einzelnes Filterelement aus der in Figur 1 dargestellten Vorrichtung gemäß einer zweiten Ausführungsform der Erfindung in der Draufsicht;
- Figur 4: eine dritte Ausführungsform der erfindungsgemäßen Vorrichtung im Längsschnitt und
- Figur 5: ein einzelnes Filterelement aus der in Figur 4 dargestellten Vorrichtung in der Draufsicht.

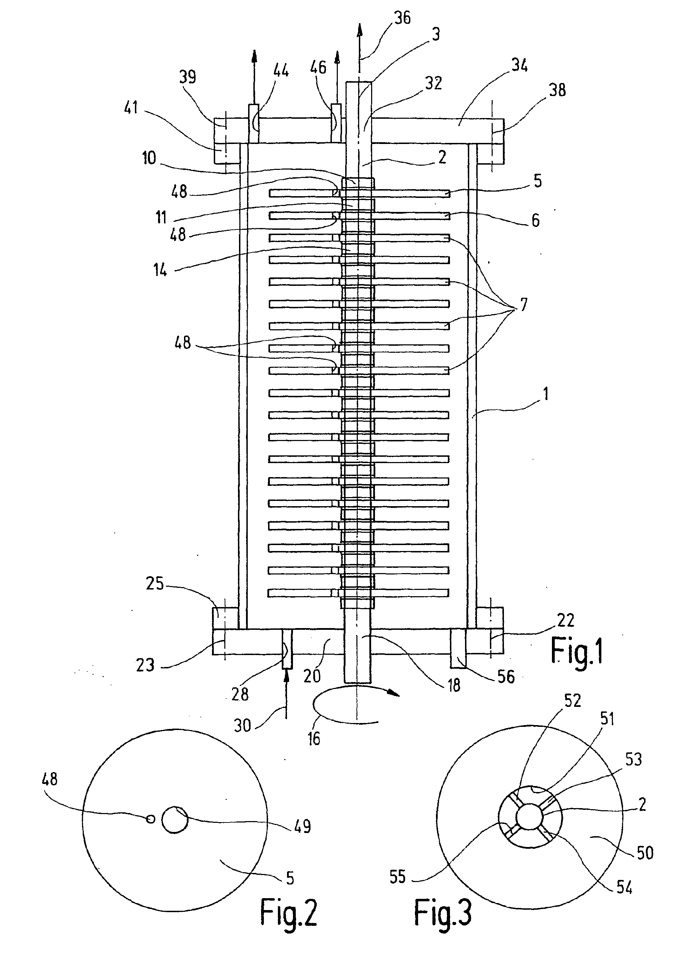

Die in Figur 1 dargestellte Vorrichtung umfasst ein Gehäuse 1, in dem eine Hohlwelle 2 um eine Drehachse 3 drehbar aufgenommen ist. Mit der Hohlwelle 2 sind eine Vielzahl von Filterelementen 5, 6 und 7 drehfest verbunden, die alle gleich ausgebildet sind. Bei der in Figur 1 dargestellten Ausführungsform sind 19 Filterelemente drehfest mit der Hohlwelle 2 verbunden. Die Hohlwelle 2 kann einstückig oder mehrteilig ausgebildet sein. Die Filterelemente werden von Membranen gebildet und sind innen hohl. Über die Membranen kann Flüssigkeit von außen in das Innere der Filterelemente gelangen, von wo es über entsprechende Öffnungen in der Mantelfläche der Hohlwelle in das Innere der Hohlwelle gelangt. Die Filterelemente 5, 6 und 7 werden durch Hülsen 10, 11 und 14 in axialer Richtung fixiert. Die Hülsen 10, 11 und 14 können mit Dichtungen zur Abdichtung der Schnittstellen zwischen den Filterelementen und der Hohlwelle ausgestattet sein.

Durch einen Pfeil 16 ist die Drehbewegung der Hohlwelle 2 mit den Filterelementen 5, 6 und 7 angedeutet. Das untere Ende 18 der Hohlwelle 2 ist geschlossen ausgebildet und in einem unteren Deckel 20 drehbar gelagert, der das Gehäuse 1 unten abschließt. Der untere Deckel 20 ist mit Hilfe von Schraubverbindungen 22 und 23 an einem Flansch 25 befestigt, der radial außen am unteren Rand des Gehäuses 1 angebracht ist. In dem unteren Deckel 20 ist außerdem eine Eintrittsöffnung 28 für eine zu filtrierende Flüssigkeit vorgesehen, die durch einen Pfeil 30 angedeutet ist. Dort ist auch eine Austrittsöffnung 56 in direkter Nachbarschaft zur Gehäusewandung angebracht, durch die Schwerstoffe mit größerer Dichte als die Flüssigkeit, die durch Rotation abgetrennt und zur Wand hin äufkonzentriert werden, abgezogen werden können.

Das obere Ende 32 der Hohlwelle 2 ist in einem oberen Deckel 34 gelagert, der das Gehäuse 1 oben verschließt. Das obere Ende 32 bildet eine Austrittsöffnung für die gefilterte Flüssigkeit, also das Filtrat. Das austretende Filtrat ist durch einen Pfeil 36 angedeutet.

Die eintretende Flüssigkeit 30 gelangt durch die Eintrittsöffnung 28 in das Innere des Gehäuses 1 und gelangt von dort durch die Filterelemente 5, 6 und 7 als Filtrat in die Hohlwelle 2, aus der sie durch das obere Ende 32 der Hohlwelle 2 austritt.

Der obere Deckel 34 ist durch Schraubverbindungen 38 und 39 an einem Flansch 41 befestigt, der radial außen am oberen Rand des Gehäuses 1 angebracht ist. In der Nähe der Mantelfläche des kreiszylinderförmigen Gehäuses 1 ist eine Austrittsöffnung 44 für aus der eintretenden Flüssigkeit 30 resultierende Konzentrate in dem oberen Deckel 34 ausgebildet. Radial weiter innen von der Austrittsöffnung 44 ist in der Nähe der Hohlwelle 2 in dem oberen Deckel 34 eine Austrittsöffnung 46 für Leichtstoffe ausgebildet.

Infolge der im Betrieb durchgeführten Drehbewegung der Hohlwelle 2 und den damit drehfest verbundenen Filterelementen wird die in dem Gehäuse 1 befindliche Flüssigkeitssäule in Drehung versetzt. Die daraus resultierenden Zentrifugalkräfte sorgen für ein Wandern der in der Flüssigkeit enthaltenen Stoffe im Zentrifugalkraftfeld. Wirksame schwerere Stoffe werden dabei gegenläufig zu leichteren Stoffen transportiert. Als schwerere Stoffe werden solche Stoffe bezeichnet, die eine größere spezifische Dichte als die Flüssigkeit aufweisen. Als leichtere Stoffe werden solche Stoffe bezeichnet, die eine geringere spezifische Dichte als die Flüssigkeit aufweisen. Die in der eintretenden Flüssigkeit 30 enthaltenen schwereren Stoffe werden aufgrund ihrer Dichte im Betrieb der Trennvorrichtung radial nach außen beschleunigt und sammeln sich im Bereich der Mantelfläche des Gehäuses 1, wo sie durch die Austrittsöffnungen 44, 56 aus dem Gehäuse 1 austreten können. Die Leichtstoffe sammeln sich aufgrund ihrer geringen Dichte an der äußeren Mantelfläche der Hohlwelle 2. Die Bewegung der schwereren Stoffe wird durch eine Strömung im Inneren der Vorrichtung von unten nach oben bewirkt.

Gemäß der vorliegenden Erfindung sind in den kreisringscheibenförmigen oder kreisscheibenförmigen Filterelementen 5, 6 und 7 Durchgangsöffnungen 48 ausgebildet. Die Durchgangsöffnungen 48 sind, wie man in Figur 1 sieht, jeweils im gleichen radialen Abstand zu der Drehachse 3 der Hohlwelle 2 angeordnet. Infolge der Drehbewegung der Hohlwelle 2 mit den Filterelementen 5, 6 und 7 ist im Betrieb der Trennvorrichtung gewährleistet, dass Leichtstoffe, die sich wegen ihrer geringen Dichte im Bereich der Hohlwelle 2 ansammeln, nach oben zur Austrittsöffnung 46 aufsteigen beziehungsweise wandern oder fließen können.

Wie man in Figur 2 sieht, sind die einzelnen Filterelemente 5 der in Figur 1 dargestellten Trennvorrichtung als Kreisringscheibe mit einer zentralen Öffnung 49 ausgestattet. Die zentrale Öffnung 49 der innen hohlen Filterelemente gewährleistet, dass das Filtrat aus dem Inneren der Filterelemente durch entsprechende Öffnungen in die Hohlwelle 2 gelangen kann. Zentrifugalkräfte bewirken den kontinuierlichen Abtransport der Deckschicht (Konzentrationspolarisation) von der Filteroberfläche der kreisscheiben- oder kreisförmigen Filterelemente und sorgen für einen kontinuierlichen, gleichförmigen transmembranen Fluss. Das Verhältnis von Filtratvolumen zu Zulaufvolumen bestimmt die Konzentration von nicht-filtrierbaren Stoffen im Austrag 44, 56.

In Figur 3 ist eine alternative Ausführungsform eines Filterelements 50 dargestellt. Das Filterelement 50 ist ebenfalls als Kreisringscheibe ausgebildet, die jedoch mit einer größeren zentralen Öffnung 51 ausgestattet als das in Figur 2 dargestellte Filterelement 5. Von der zentralen Öffnung 51 gehen hohle Speichen 52, 53, 54 und 55 aus, die radial nach innen verlaufen und das Innere des Filterelements 50 mit der Hohlwelle 2 verbinden. Selbstverständlich sind im Bereich der Schnittstellen zwischen den Speichen 52 bis 55 und der Hohlwelle 2 in der Hohlwelle 2 entsprechende Öffnungen vorgesehen, die den Durchtritt des Filtrats ermöglichen. Gleichzeitig gewähren die Speichen 52 bis 55 im eingebauten Zustand des Filterelements 50, dass Leichtstoffe in Richtung der Drehachse 3 der Hohlwelle 2 ungehindert zwischen den Speichen 52 bis 55 hindurchtreten können. Dadurch wird ein nahezu ungehindertes Aufsteigen von Leichtstoffen im Bereich der Hohlwelle 2 sichergestellt.

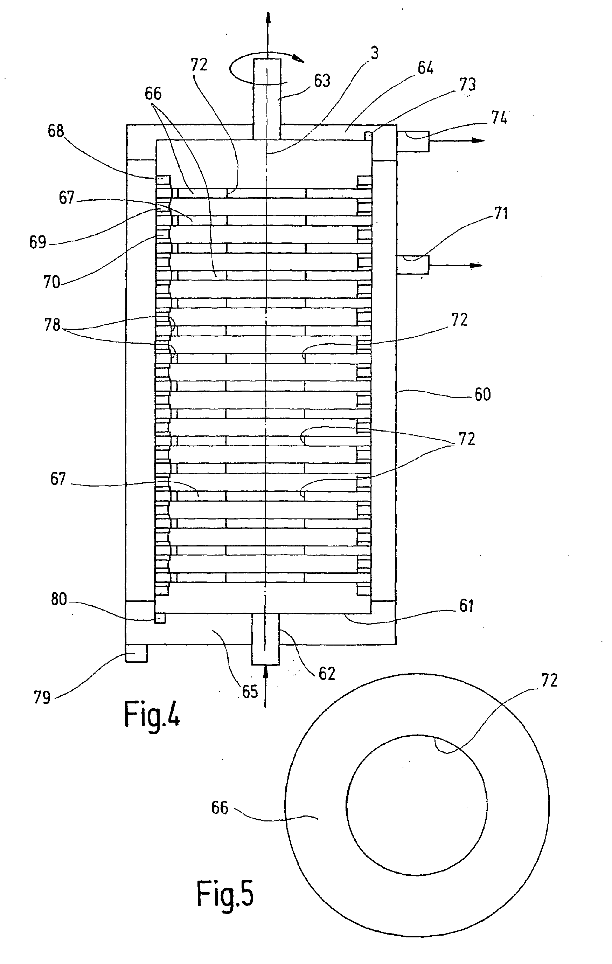

In Figur 4 ist eine weitere Ausführungsform einer erfindungsgemäßen Trennvorrichtung dargestellt. Die Trennvorrichtung umfasst ein Gehäuse 60, in dem eine kreiszylinderförmige Trommel 61 drehbar aufgenommen ist. An der unteren Stirnseite der Trommel 61 ist ein hohler, am Ende offener Zapfen 62 angebracht, der den Eintritt der zu filtrierenden Flüssigkeit in das Innere der Trommel 61 ermöglicht. An der oberen Stirnseite der Trommel 61 ist ein hohler, am Ende offener Zapfen 63 angebracht, der den Austritt von Leichtstoffen aus dem Inneren der Trommel 61 ermöglicht.

Das Gehäuse 60 ist unten durch einen Boden 65 und oben durch einen Deckel 64 verschlossen. Das Gehäuse 60 ist, wie die Trommel 61, kreiszylinderförmig ausgebildet und weist einen etwas größeren Durchmesser als die Trommel 61 auf. Die Trommel 61 ist über die hohlen Zapfen 62 und 63 in dem Boden 65 des Gehäuses 60 beziehungsweise in dem Deckel 64 des Gehäuses 60 gelagert.

Eine Vielzahl von Filterelementen 66, 67 sind radial außen drehfest mit der Mantelfläche der Trommel 61 verbunden. Die Filterelemente 66, 67 sind mit Hilfe von Befestigungsringen 68, 69, 70 in Richtung der Drehachse 3 fixiert. Außerdem dienen die Befestigungsringe 68, 69, 70 dazu, die Schnittstellen zwischen den Filterelementen 66, 67 und der Mantelfläche der Trommel 61 abzudichten. Die Trommel ist im Bereich der Filterelemente durchlässig für die filtrierte Flüssigkeit. Die Filterelemente 66, 67 haben, wie insbesondere aus Figur 5 ersichtlich ist, die Form von Kreisringscheiben mit einer zentralen Durchgangsöffnung 72. Die zentralen Durchgangsöffnungen 72 gewährleisten, dass Leichtstoffe, die sich im Betrieb der Trennvorrichtung im Bereich der Drehachse 3 der Trommel 61 ansammeln, ungehindert zu der Austrittsöffnung 63 aufsteigen können. Eine Austrittsöffnung für Schwerstoffe ist radial außen am oberen Rand der Trommel 61 vorgesehen und mit 73 bezeichnet. Durch die Austrittsöffnung 73 gelangen Schwerstoffe in den hohl ausgebildeten Deckel 64 und von dort in eine Austrittsöffnung 74, die radial außen in dem Deckel 64 vorgesehen ist. Eine weitere Austrittsöffnung für Schwerstoffe ist radial außen am unteren Rand der Trommel 61 vorgesehen und mit 80 bezeichnet. Durch die Austrittsöffnung 80 gelangen Schwerstoffe in den hohl ausgebildeten Boden 65 und von dort in eine Austrittsöffnung 79, die radial außen in dem Boden 65 vorgesehen ist.

Die Filterelemente 66, 67 sind radial außen mit in Richtung der Drehachse 3 der Trommel 61 verlaufenden Durchgangsöffnungen 78 ausgestattet. Die Durchgangsöffnungen 78 gewährleisten den Durchtritt von Feststoffen und verhindern so, dass sich radial außen an den Filterelementen Anbackungen bilden. In der unteren Stirnwand der Trommel 61 sind radial außen eine oder mehrere Durchtrittsöffnungen (nicht dargestellt) vorgesehen. Diese ermöglichen den Durchtritt von Feststoffen, die ein größeres spezifisches Gewicht aufweisen als die zu filtrierende Flüssigkeit, zu mindestens einer Austrittsöffnung 79, die radial außen in der unteren Stirnwand des Gehäuses 60 angeordnet ist. Die kreisringförmigen Filterelemente können auch segmentiert ausgebildet sein, so dass Spalte den Festkörperdurchtritt ermöglichen, oder wie in Turbinen angeordnet sein.

Im Betrieb der in den Figuren 1 bis 5 dargestellten Filtervorrichtung wird eine zu filternde Flüssigkeit, zum Beispiel eine Suspension, beispielsweise über eine Pumpe durch die Eintrittsöffnung 28, 62 in das Gehäuse 1 beziehungsweise in die Trommel 61 gefördert. Die Flüssigkeit wird durch die Filterelemente eingezogen und durch die in Strömungsverbindung mit den Filterelementen stehende Hohlwelle beziehungsweise über den Ringraum zwischen der Trommel 61 und dem Gehäuse 60 abgezogen. Durch die bei der Rotation der Filterelemente auftretende Flüssigkeitsbewegung und die auf die Flüssigkeit wirkenden Zentrifugalkräfte kann eine unerwünschte Deckschichtbildung an den Filterelementen wirkungsvoll unterbunden werden. Der für die Filtration notwendige transmembrane Druck kann beispielsweise durch Anlegen eines Unterdrucks auf der Filtratseite oder durch Anlegen eines Überdrucks an den Eintrittsöffnung der Trennvorrichtung erfolgen. Außerdem ist es vorteilhaft, den in vielen für die Verwendung der beschriebenen Trennvorrichtung geeigneten Anlagen zur Wasseraufbereitung vorhandenen hydrostatischen oder hydrodynamischen Druck zur Erzeugung des erforderlichen transmembranen Druckgefälles zu nutzen. Moderne Abwasserreinigungsanlagen weisen beispielsweise Belebungsreaktoren von bis zu 20 m Höhe auf, wodurch ein transmembranes Druckgefälle aufgrund des hydrostatischen Drucks von fast 2 bar möglich ist.

Die Filterelemente können als Membranen aufweisende oder mit Membranen überzogene Hohlkörper beziehungsweise Hohlrahmen ausgeführt sein. Dabei können übliche in der Membrantrenntechnik verwendete technische Membranen, zum Beispiel Polymermembranen, Membranfilter, Ultrafiltrationsmembranen, Mikrofiltrationsmembranen oder Nanofiltrationsmembranen verwendet werden.

Die in Figur 1 dargestellte Hohlwelle 2 kann einstückig oder mehrteilig aus verschiedenen, zum Beispiel rohrförmigen, hohlen Abschnitten ausgebildet sein, wobei die verschiedenen Abschnitte der Hohlwelle durch zwischen diesen angeordnete Filterelemente, insbesondere Filterscheiben, getrennt und zu der zu filtrierenden Flüssigkeit hin flüssigkeitsdicht durch diese verbunden sind. Wesentlich ist, dass zwischen dem Inneren der Hohlwelle beziehungsweise dem Inneren des Ringraums zwischen Trommel und Gehäuse eine Fluidverbindung in Form mindestens einer Öffnung vorhanden ist, die den Durchtritt des Filtrats ermöglicht.

Die Trenn- beziehungsweise Filtervorrichtung kann sowohl in aerob als auch in anaerob arbeitenden Systemen, zum Beispiel Abwasserbehandlungs- oder Wasseraufbereitungssystemen verwendet werden. Die Filtervorrichtung kann beispielsweise in der Belebungsstufe einer Kläranlage eingebaut werden und stellt ein modernes System zur Biomasserückhaltung und damit zur Aufkonzentrierung der Biomasse dar. Selbstverständlich kann die Filtervorrichtung auch in der Auftrennung des Zulaufs zu Kläranlagen nach oder anstatt der Vorklärung eingesetzt werden. Dadurch wird der Zulauf in ein kohlenstoffreiches Konzentrat, das anaerob zu Biogas umgesetzt werden kann und ein kohlenstoffarmes Filtrat aufgetrennt, das zum Beispiel in Hochleistungsabwasserreaktoren aerob umgesetzt werden kann. Selbstverständlich ist es auch möglich, die Filtervorrichtung zur Trinkwassergewinnung aus Oberflächengewässern einzusetzen. Die Trennvorrichtung kann auch Einrichtungen zum Luft- oder Gaseintrag aufweisen, um eine aerobe Betriebsführung zu ermöglichen.

Das Gehäuse 1, 60 hat vorzugsweise im Wesentlichen die Gestalt eines Kreiszylinders, dessen Längsachse vorzugsweise in vertikaler Richtung, also senkrecht zu einem horizontalen Untergrund angeordnet ist. Die Drehachse der Filterelemente ist vorzugsweise ebenfalls in vertikaler Richtung, also senkrecht zu einem horizontalen Untergrund angeordnet. Darüber hinaus ist die Eintrittsöffnung 28, 62 in das Gehäuse 1 beziehungsweise die Trommel 61 in dem Boden des Gehäuses 1 beziehungsweise dem unteren Deckel 20 beziehungsweise in der unteren Stirnseite der Trommel 61 angeordnet. Diese Anordnung gewährleistet, dass in dem Gehäuse 1 beziehungsweise in der Trommel 61 enthaltene Leichtstoffe parallel beziehungsweise entlang der Drehachse 3 der Filterelemente aufsteigen. Erfindungsgemäß wird durch die Durchgangsöffnungen 48, die Speichen 52 bis 55 und/oder die zentralen Durchgangsöffnungen 72 ein nahezu ungehinderter Aufstieg von Leichtstoffen in der Trennvorrichtung ermöglicht.

## Patentansprüche

1. Vorrichtung zum Trennen von Stoffen, insbesondere Feststoffen, Flüssigkeitsphasen unterschiedlicher Dichte und/oder Gasen, aus einer Flüssigkeit, mit mehreren um eine Drehachse (3) rotierbaren im Wesentlichen scheibenförmig ausgebildeten Filterelementen (5,6,7), welche um die Drehachse (3) drehbar in einem Gehäuse (1) aufgenommen sind und drehfest mit einer konzentrisch zur Drehachse (3) angeordneten Hohlwelle (2) verbunden sind, das eine Eintrittsöffnung (28) für die Flüssigkeit, mindestens eine radial außen angeordnete Austrittsöffnung (44,56) für die durch Rotation getrennten schweren Stoffe und mindestens eine zentrale Austrittsöffnung (32) für die filtrierte Flüssigkeit aufweist, **dadurch gekennzeichnet,**
**dass** die Innenräume der Filterelemente (5,6,7) über zentrale Durchgangsöffnungen (49) mit dem Innenraum der Hohlwelle (2) für die Abführung der filtrierten Flüssigkeit in Verbindung stehen, dass im Bereich oder in der Nähe der Drehachse (3) der Filterelemente in den Filterelementen mindestens eine Durchgangsöffnung (48) für Stoffe, die eine geringere Dichte als die Flüssigkeit aufweisen, vorgesehen ist und dass im Deckel (34) des Gehäuses (1) in der Nähe der Hohlwelle (2) eine Austrittsöffnung (46) für den Austritt der Stoffe mit geringerer Dichte als die Flüssigkeit angeordnet ist.

2. Vorrichtung nach Anspruch 1, **dadurch gekennzeichnet, dass** die Filterelemente (5,6,7) kreisringscheibenförmig ausgebildet sind.

3. Vorrichtung nach Anspruch 1 oder 2, **dadurch gekennzeichnet, dass** die Durchgangsöffnungen (48) in den Filterelementen (5,6,7) im Wesentlichen im gleichen radialen Abstand zu der Hohlwelle (2) angeordnet sind.

4. Vorrichtung zum Trennen von Stoffen, insbesondere Feststoffen, Flüssigkeitsphasen unterschiedlicher Dichte und/oder Gasen, aus einer Flüssigkeit, mit mehreren um eine Drehachse (3) rotierbaren im Wesentlichen scheibenförmig ausgebildete Filterelementen (5,6,7;50), welche um die Drehachse (3) drehbar in einem Gehäuse (1) aufgenommen sind, das eine Eintrittsöffnung (28) für die Flüssigkeit, mindestens eine radial außen angeordnete Austrittsöffnung (44,56) für die durch Rotation getrennten schweren Stoffe und mindestens eine zentrale Austrittsöffnung (32) für die filtrierte Flüssigkeit aufweist, **dadurch gekennzeichnet,**
**dass** die Filterelemente kreisringscheibenförmig mit einer großen zentralen Öffnung (51) ausgebildet sind, dass die Innenräume der Filterelemente über mehrere in Umfangsrichtung voneinander beabstandete, hohle Speichen (52,53,54,55) im Bereich der zentralen Öffnung (51) mit dem Innenraum der konzentrisch zu der Drehachse (3) angeordneten Hohlwelle (2) für die Abführung der filtrierten Flüssigkeit in Verbindung stehen und dass im Deckel (34) des Gehäuses (1) in der Nähe der Hohlwelle (2) eine zusätzliche Austrittsöffnung (46) für den Austritt der Stoffe mit geringerer Dichte als die Flüssigkeit angeordnet ist.

5. Vorrichtung zum Trennen von Stoffen, insbesondere Feststoffen, Flüssigkeitsphasen unterschiedlicher Dichte und/oder Gasen, aus einer Flüssigkeit, umfassend mehrere kreisringscheibenförmig ausgebildete Filterelemente (66,67), eine kreiszylinderförmige Trommel (61) und ein Gehäuse (60),
wobei die Filterelemente (66,67) radial drehfest mit der Mantelfläche der Trommel (61) verbunden sind und über Befestigurlgsringe (68,69,70), welche die Schnittstellen zwischen den Filterelementen (66,67) und der Mantelfläche der Trommel (61) abdichten, in Richtung der Drehachse (3) fixiert sind, eine zentrale Öffnung (72) für den Durchgang von Stoffen mit geringerer Dichte als die Flüssigkeit aufweisen und radial außen, innerhalb der Trommel (61) mindestens eine Durchgangsöffnung (78) für den Durchgang der schweren Stoffe aufweisen,
wobei die Trommel (61) in dem Gehäuse (60) um eine Drehachse (3) drehbar aufgenommen ist und im Bereich der Filterelemente (66,67) für die filtrierte Flüssigkeit durchlässig ist, so dass die Filterelemente (66,67) mit einem Ringraum (zwischen 60 und 61), der konzentrisch zu der Drehachse (3) der Filterelemente radial außerhalb der Filterelemente angeordnet ist, in Verbindung stehen, und mindestens eine radial außen, an der Stirnseite der Trommel angeordnete Austrittsöffnung (73,80) für die schweren Stoffe aufweist und
wobei das Gehäuse (60) eine Öffnung (62) für den Eintritt der zu filtrierenden Flüssigkeit in das Innere der Trommel (61), mindestens eine radial außen im Deckel (64) und/oder Boden (65) angeordnete Austrittsöffnung (74,79) für die schweren Stoffe, mindestens eine radial außen, im Bereich der Filterelemente angeordnete Austrittsöffnung (71) für die filtrierte Flüssigkeit, und mindestens eine im Deckel (64) in der Nähe der Drehachse (3) angeordnete Austrittsöffnung (63) für den Austritt der Stoffe mit geringerer Dichte als die Flüssigkeit aufweist.

6. Vorrichtung nach Anspruch 5, **dadurch gekennzeichnet, dass** an der unteren Stirnseite der Trommel als Eintrittsöffnung (62) ein Eintrittsstutzen für die Flüssigkeit und an der oberen Stirnseite der Trommel als Austrittsöffnung (63) ein Austrittsstutzen für Leichtstoffe vorgesehen ist.

7. Vorrichtung nach Anspruch 6, **dadurch gekennzeichnet, dass** der Eintrittsstutzen (62) und der Austrittsstutzen (63) konzentrisch zu den Filterelementen (66,67) angeordnet sind und zur Lagerung der Trommel (61) verwendet werden.

8. Verfahren zum Trennen von Stoffen, insbesondere Feststoffen, Flüssigkeitsphasen unterschiedlicher Dichte und/oder Gasen, aus einer Flüssigkeit, wobei die Flüssigkeit unter Anlegen eines Druckgefälles in eine Vorrichtung gemäß einem der Ansprüche 1 bis 7 eingebracht, die Filterelemente in Rotation versetzt werden und filtriert wird.

## Claims

1. Device for separating materials, in particular solids, liquid phases of different density and/or gases, from a liquid, having a plurality of filter elements (5, 6, 7) which can be rotated about an axis of rotation (3) and have an essentially disc-shaped configuration, said filter elements being received rotatably about the axis of rotation (3) in a housing (1) and being connected non-rotatably to a hollow shaft (2) which is disposed concentrically relative to the axis of rotation (3), said housing having an inlet opening (28) for the liquid, at least one radially outwardly disposed outlet opening (44, 56) for the heavy materials separated by rotation and at least one central outlet opening (32) for the filtered liquid, **characterised in that**
the interiors of the filter elements (5, 6, 7) are connected via central through-openings (49) to the interior of the hollow shaft (2) for discharge of the filtered liquid, **in that** at least one through-opening (48), for materials which have a lower density than the liquid, is provided in the filter elements in the region or in the vicinity of the axis of rotation (3) of the filter elements and **in that** an outlet opening (46) for discharge of the materials with a lower density than the liquid is disposed in the cover (34) of the housing (1) in the vicinity of the hollow shaft (2).

2. Device according to claim 1, **characterised in that** the filter elements (5, 6, 7) have a circular annular disc-shaped configuration.

3. Device according to claim 1 or 2, **characterised in that** the through-openings (48) in the filter elements (5, 6, 7) are disposed essentially at the same radial spacing relative to the hollow shaft (2).

4. Device for separating materials, in particular solids, liquid phases of different density and/or gases, from a liquid, having a plurality of filter elements (5, 6, 7; 50) which can be rotated about an axis of rotation (3) and have an essentially disc-shaped configuration, said filter elements being received rotatably about the axis of rotation (3) in a housing (1) which has an inlet opening (28) for the liquid, at least one radially outwardly disposed outlet opening (44, 56) for the heavy materials separated by rotation and at least one central outlet opening (32) for the filtered liquid, **characterised in that**
the filter elements have a circular annular disc-shaped configuration with a large central opening (51), **in that** the interiors of the filter elements are connected via a plurality of hollow spokes (52, 53, 54, 55), which are at a spacing from each other in the circumferential direction, in the region of the central opening (51) to the interior of the hollow shaft (2), which is disposed concentrically relative to the axis of rotation (3), for discharge of the filtered liquid and **in that** an additional outlet opening (46) for discharge of the materials with a lower density than the liquid is disposed in the cover (34) of the housing (1) in the vicinity of the hollow shaft (2).

5. Device for separating materials, in particular solids, liquid phases of different density and/or gases, from a liquid, comprising a plurality of filter elements (66, 67) which have a circular annular disc-shaped configuration, a circular-cylindrical drum (61) and a housing (60),
wherein the filter elements (66, 67) are connected to the outer peripheral face of the drum (61) in a radially non-rotatable manner and are fixed via mounting rings (68, 69, 70), which seal the interfaces between the filter elements (66, 67) and the outer peripheral face of the drum (61), in the direction of the axis of rotation (3), have a central opening (72) for passage of materials with a lower density than the liquid and have at least one through-opening (78) for passage of the heavy materials radially outwardly, within the drum (61),
wherein the drum (61) is received rotatably about an axis of rotation (3) in the housing (60) and, in the region of the filter elements (66, 67), is permeable for the filtered liquid so that the filter elements (66, 67) are connected to an annular space (between 60 and 61) which is disposed concentrically relative to the axis of rotation (3) of the filter elements radially outwith the filter elements, and has at least one outlet opening (73, 80) for the heavy materials which is disposed radially outwardly on the end-side of the drum and
wherein the housing (60) has an opening (62) for entry of the liquid to be filtered into the interior of the drum (61), at least one outlet opening (74, 79) for the heavy materials which is disposed radially outwards in the cover (64) and/or base (65), at least one outlet opening (71) for the filtered liquid, which is disposed radially outwards in the region of the filter elements, and at least one outlet opening (63) which is disposed in the cover (64) in the vicinity of the axis of rotation (3), for discharge of the materials with a lower density than the liquid.

6. Device according to claim 5, **characterised in that** an inlet connection piece for the liquid is provided on the lower end-side of the drum as inlet opening (62) and, on the upper end-side of the drum, an outlet connection piece for light materials is provided as outlet opening (63).

7. Device according to claim 6, **characterised in that** the inlet connection piece (62) and the outlet connection piece (63) are disposed concentrically relative to the filter elements (66, 67) and are used for mounting the drum (61).

8. Method for separating materials, in particular solids, liquid phases of different density and/or gases, from a liquid, the liquid being introduced into a device according to one of the claims 1 to 7 with application of a pressure gradient, the filter elements being set in rotation and filtering taking place.

## Revendications

1. Dispositif de séparation, à partir d'un liquide, de substances, en particulier de matières solides, de phases liquides de densités différentes et/ou de gaz, à partir d'un liquide, comportant :
- plusieurs éléments de filtre (5, 6, 7) essentiellement en forme de disque, qui, logés dans un boîtier (1), tournent selon l'axe de rotation (3) et sont reliés de manière fixe en rotation à un arbre creux (2) concentrique à l'axe de rotation (3),
- une ouverture d'entrée (28) pour le liquide,
- au moins une ouverture de sortie (44, 56) radiale extérieure pour les matières lourdes séparées par rotation, et
- au moins une ouverture de sortie centrale (32) pour le liquide filtré,
**caractérisé en ce que**
- les espaces intérieurs des éléments de filtre (5, 6, 7) sont reliés, par des ouvertures centrales (49) de passage, à l'espace intérieur de l'arbre creux (2) pour l'évacuation du liquide filtré,
- au niveau ou à proximité de leur axe de rotation (3) on prévoit dans les éléments de filtre, au moins une ouverture de passage (48) pour les substances d'une densité plus faible que le liquide, et
- une ouverture de sortie (46) pour des substances d'une densité plus faible que le liquide, est disposée dans le couvercle (34) du boîtier (1), à proximité de l'arbre creux (2).

2. Dispositif selon la revendication 1,
**caractérisé en ce que**
les éléments de filtre (5, 6, 7) sont des disques circulaires.

3. Dispositif selon la revendication 1 ou 2,
**caractérisé en ce que**
les ouvertures de passage (48) disposées dans les éléments de filtre (5, 6, 7) sont essentiellement à la même distance radiale par rapport à l'arbre creux (2).

4. Dispositif de séparation, à partir d'un liquide, de substances, en particulier de matières solides, de phases liquides de densités différentes et/ou de gaz, comportant :
- plusieurs éléments de filtre (5, 6, 7 ; 50) essentiellement en forme de disque, qui, logés dans un boîtier (1), tournent selon un axe de rotation (3),
- une ouverture d'entrée (28) pour le liquide,
- au moins une ouverture de sortie (44, 56) radiale extérieure pour les matières lourdes séparées par rotation, et
- au moins une ouverture de sortie centrale (32) pour le liquide filtré,
**caractérisé en ce que**
les éléments de filtre sont des disques circulaires ayant une grande ouverture centrale (51), dont les espaces intérieurs sont reliés, par plusieurs rayons creux (52, 53, 54, 55), distants l'un de l'autre dans le sens périphérique, au niveau de l'ouverture centrale (51), à l'espace intérieur de l'arbre creux (2) concentrique à l'axe de rotation (3) pour l'évacuation du liquide filtré, et
- une ouverture de supplémentaire (46), pour la sortie des substances d'une densité plus faible que le liquide, est disposée dans le couvercle (34) du boîtier (1) à proximité de l'arbre creux (2).

5. Dispositif de séparation, à partir d'un liquide, de substances, en particulier de matières solides, de phases liquides de densités différentes et/ou de gaz, comportant ;
- plusieurs éléments de filtre (66, 67) en forme de disque circulaire,
- un tambour cylindrique circulaire (61),
- un boîtier (60),
les éléments de filtre (66, 67) étant reliés au manteau du tambour (61) de manière radialement fixe en rotation et immobilisés en direction de l'axe de rotation (3) par des bagues de fixation (68, 69, 70) qui ferment hermétiquement les interfaces entre les éléments de filtre (66, 67) et le manteau du tambour (61), et présentant une ouverture centrale (72) pour le passage de substances ayant une densité plus faible que le liquide et à l'intérieur du tambour (61) au moins une ouverture de passage (78) radiale extérieure pour le passage de substances lourdes,
le tambour (61) étant logé dans le boîtier (60) de manière à pouvoir tourner autour d'un axe de rotation (3) et perméable au liquide filtré au niveau des éléments de filtre (66, 67) de manière à ce que les éléments de filtre (66, 67) soient reliés à un espace annulaire (entre 60 et 61) disposé concentriquement à l'axe de rotation (3) des éléments de filtre radialement à l'extérieur des éléments de filtre et présente au moins une ouverture de sortie (73, 80) radiale extérieure pour les matières lourdes, sur le côté avant du tambour
le boîtier (60) présentant une ouverture (62) pour l'entrée du liquide à filtrer à l'intérieur du tambour (61), au moins une ouverture de sortie (74, 79) radiale extérieure pour les matières lourdes dans le couvercle (64) et/ou le fond (65), au moins une ouverture de sortie (71) radiale extérieure pour le liquide filtré au niveau des éléments de filtre et au moins une ouverture de sortie (63) disposée dans le couvercle (64) à proximité de l'axe de rotation (3) pour la sortie des substances ayant une densité plus faible que le liquide.

6. Dispositif selon la revendication 5,
**caractérisé en ce qu'**
on prévoit, sur le côté avant inférieur du tambour, une ouverture d'entrée (62) tubulaire pour le liquide et sur le côté avant supérieur du tambour, une ouverture de sortie (63) tubulaire pour les substances légères.

7. Dispositif selon la revendication 6,
**caractérisé en ce que**
la tubulure d'entrée (62) et la tubulure de sortie (63) sont concentriques aux éléments de filtre (66, 67) et utilisées pour le positionnement du tambour (61).

8. Procédé de séparation de substances, en particulier de matières solides, de phases liquides de densité différente et/ ou de gaz, à partir d'un liquide, dans lequel on introduit le liquide dans un dispositif selon l'une quelconque des revendications 1 à 7, et en appliquant un gradient hydraulique, on met les éléments de filtre en rotation puis on filtre.
